# EUROPEAN PATENT APPLICATION

(11) **EP 4 585 906 A1**
(43) Date of publication of application: **16.07.2025**
(21) Application number: 23863137.8
(22) Date of filing: 04.09.2023
(51) Int. Cl.: G01N 21/17, G01W 1/08

(54) **OPTICAL DATA ACQUISITION DEVICE AND OPTICAL DATA ACQUISITION METHOD**

(30) Priority: 08.09.2022 JP 2022142763
(71) Applicant: The Japan Aerospace Exploration Agency, Chofu-shi, Tokyo 182-8522 (JP); Ana Holdings Inc., Tokyo, 105-7140 (JP)
(72) Inventor: SUTO Hiroshi, Chofu-shi, Tokyo 182-8522 (JP); KUZE Akihiko, Chofu-shi, Tokyo 182-8522 (JP); HOSHINO Chiharu, Chofu-shi, Tokyo 182-8522 (JP); SHIGETOH Mayumi, Chofu-shi, Tokyo 182-8522 (JP); MATSUMOTO Ayako, Tokyo 105-7140 (JP)
(74) Representative: Grünecker Patent- und Rechtsanwälte PartG mbB
(86) International application number: PCT/JP2023/032216
(87) International publication number: WO 2024/053599

(57) **Abstract**

According to the present invention, acquisition of optical data for calculating observation information can be realized with a simple configuration using an aircraft. The optical data acquisition apparatus of the present invention that solves the problem includes: a housing having a processing circuit inside, the housing placed on and pressed and fixed to a seat surface of a seat of an aircraft; a light collecting unit having a detection surface, the detection surface pointing toward a field of view of a window of the aircraft, the boundary of a field of view of the detection surface falling within the scope of the window; and a connection cable configured to electrically or optically connect the light collecting unit and the processing circuit, wherein the processing circuit calculates observation information from optical data acquired from the light collecting unit.

## Description

### Technical Field

The present invention relates to an optical data acquisition apparatus and an optical data acquisition method that use an aircraft.

### Background Art

Satellites equipped with apparatuses for remotely measuring the concentrations of Earth's gaseous components from optical data are already in operation. For example, PTL 1 discloses an apparatus that measures the concentration of carbon dioxide on the Earth from a satellite and makes a correction to the measured value. In this way, it is common to use satellites for observing the Earth, such as observation of the concentrations of gaseous components near the surface of the Earth from optical data.

### Citation List

### Patent Literature

PTL 1: International Publication No. WO 2009/090745

### Summary of Invention

### Technical Problem

When observation of the Earth's atmosphere and surface is carried out by means of optical data using satellites, the costs associated with acquiring the data such as the cost of the satellites and the cost of operating the satellites are high. Further, although observation by satellites is suitable for observation over a relatively large area of the Earth, it is not suitable for compact observation over a local area. Furthermore, because satellites travel at a high speed, satellites are not suitable for detailed local observation.

In addition, there is a need for an optical data acquisition apparatus and an optical data acquisition method that acquire optical data for performing observation of, for example, the concentration of gaseous components at a local area on the surface of the Earth. In order to perform observation of the Earth using optical data, and in particular to perform observation of a phenomenon at a point close to the surface of the Earth, it is desirable to perform direct observation at an altitude that corresponds to the phenomenon. Since a satellite performs observation from a high altitude that is far from the surface of the Earth, there is a need for an optical data acquisition apparatus and an optical data acquisition method that can acquire optical data for observing the phenomenon at a location as close as possible to the surface of the Earth. Further, in this connection, although observation is sometimes performed using small aircraft, conventionally measurement has been performed by attaching an apparatus to the outside of an aircraft or by performing measurement from the underside of an aircraft through a hole provided in the aircraft, which makes access to the measuring apparatus difficult, and there is also the problem of the measuring apparatus being exposed to the outside, or the concern that the hole provided in the aircraft will decrease the rigidity of the aircraft.

### Solution to Problem

The problem is solved by an optical data acquisition apparatus configured to acquire optical data in a field of view from a window of an aircraft, the aircraft having the window and a seat juxtaposed next to the window, the seat having a seat surface, the optical data acquisition apparatus including: a housing having a processing circuit inside, the housing placed on and pressed and fixed to the seat surface of the seat; a light collecting unit having a detection surface the detection surface pointing toward the field of view of the window through the window, the light collecting unit fixed to the housing such that a boundary of a field of view of the detection surface falls within a scope of the window; and a connection cable configured to electrically or optically connect the light collecting unit and the processing circuit; wherein the processing circuit calculates observation information from the window, from optical data acquired from the light collecting unit.

The problem is solved by an optical data acquisition method of acquiring, by an optical data acquisition apparatus, optical data in a field of view from a window of an aircraft, the aircraft having the window and a seat juxtaposed next to the window, the seat having a seat surface, the optical data acquisition apparatus including: a housing having a processing circuit inside, the housing placed on and pressed and fixed to the seat surface of the seat; a light collecting unit having a detection surface the detection surface pointing toward the field of view of the window, the light collecting unit fixed to the housing such that a boundary of a field of view of the detection surface falls within a scope of the window; and a connection cable configured to electrically or optically connect the light collecting unit and the processing circuit; wherein the processing circuit calculates observation information from the window, from optical data acquired from the light collecting unit.

### Advantageous Effect of Invention

According to the present invention, acquisition of optical data for calculating observation information pertaining to an observation target in a field of view of a window of an aircraft can be realized with a simple configuration using the aircraft.

### Brief Description of Drawings

Fig. 1 is a block diagram of a configuration of an optical data acquisition apparatus 1 that is an embodiment of the present invention.
Fig. 2A is a perspective view of one typical example of installation of the optical data acquisition apparatus 1 that is the embodiment of the present invention.
Fig. 2B is a perspective view of another example of installation of the optical data acquisition apparatus 1 that is the embodiment of the present invention.
Fig. 2C is a perspective view of a further example of installation of the optical data acquisition apparatus 1 that is the embodiment of the present invention.
Fig. 3 is a view illustrating the observation concept between an aircraft and the surface of the Earth by the optical data acquisition apparatus 1 that is the embodiment of the present invention.
Fig. 4 is a view illustrating details inside the aircraft in the observation concept with respect to the optical data acquisition apparatus 1 that is the embodiment of the present invention, which is an enlarged view of a portion inside the aircraft illustrated in Fig. 3.

### Description of Embodiment

### [Embodiment]

### (Configuration of optical data acquisition apparatus 1)

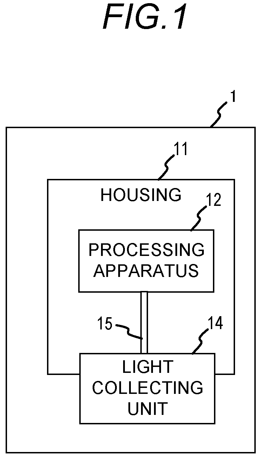

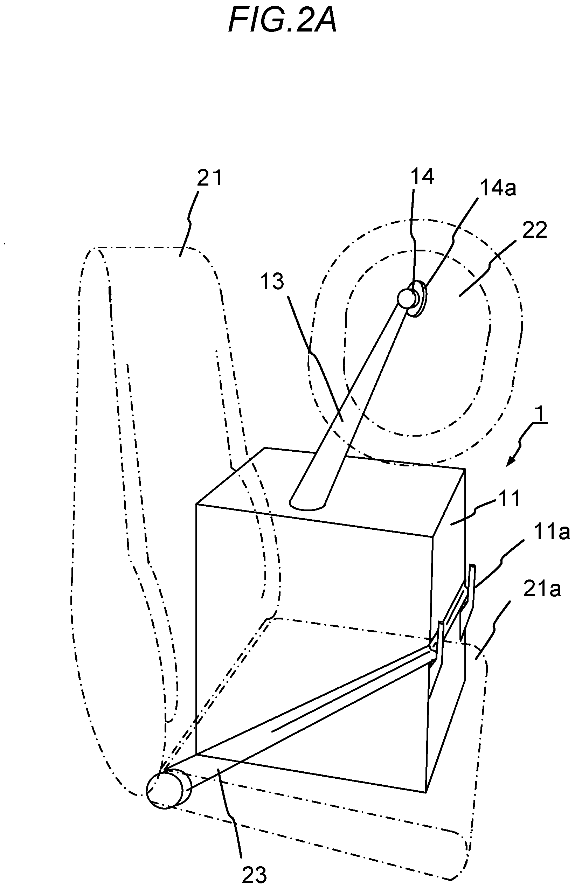

A configuration of an optical data acquisition apparatus 1 will be described referring to Fig. 1 to Fig. 2B. Fig. 1 is a block diagram of the configuration of the optical data acquisition apparatus 1. Fig. 2A to Fig. 2C are views illustrating installation states of the optical data acquisition apparatus 1. The optical data acquisition apparatus 1 includes a housing 11, a processing apparatus 12 arranged inside the housing 11, a light collecting unit 14, and a connection cable 15. The housing 11 of the optical data acquisition apparatus 1 is composed of at least one housing, but may be composed of a plurality of housings. Further, the housing 11 may be a housing 11 composed of a plurality of housings and configured by electrically connecting the plurality of housings to each other using cables.

The optical data acquisition apparatus 1 uses an aircraft 2 typified by a passenger aircraft, and calculates observation information with respect to an observation target along the flight route of the aircraft 2. Here, the term "observation information" refers to information about phenomena on Earth which can be observed from the field of view of a window 22 of the aircraft 2, and which is information observed by calculation from optical data acquired from the window 22 of the aircraft 2. Typically the phenomena are, in particular, "a concentration of a gaseous component", "an intensity of fluorescence", and "cloud characteristics including cloud top height" near the surface of the Earth. Here, the "gaseous component" is typically at least one of carbon dioxide, methane, and nitrogen dioxide. Further, the term "optical data" refers to data relating to light acquired through the window 22 of the aircraft 2. The "concentration of a gaseous component", "intensity of fluorescence", and "cloud characteristics including cloud top height" are each described later.

The aircraft 2 to which the optical data acquisition apparatus 1 is applied is an aircraft having the window 22 and a seat 21 arranged in juxtaposition to the window 22. The window 22 has a structure in which a transparent window material is fitted into a window frame. The seat 21 has a seat surface 21a. In particular, as a specific example, the window 22 is a window over an entire area of the aircraft 2, such as a window in the side of the fuselage of the aircraft 2, or a cockpit window. An aircraft that is not equipped with the window 22 and the seat 21 arranged in juxtaposition to the window 22 is not an object for application of the optical data acquisition apparatus 1. Conversely, an aircraft that has the window 22 and the seat 21 arranged in juxtaposition to the window 22 is an object for application of the optical data acquisition apparatus 1, even if the aircraft is used for transporting cargo rather than transporting passengers. The optical data acquisition apparatus 1 is placed on the seat surface 21a of the seat 21 arranged in juxtaposition to the window 22 of the aircraft 2.

The seat 21 has a seat belt 23. The seat belt 23 has a connection fastener, and is fixed to a winding and fixing portion on one side of the seat surface 21a. A connection receptacle that receives and connects to the connection fastener of the seat belt 23 is arranged on the other side of the seat surface 21a. The seat belt 23 extends from the winding and fixing portion of the seat surface 21a to the connection receptacle on the other side of the seat surface 21a, and thereby enables an object to be pressed and fixed to the seat surface, and when the connection fastener of the seat belt 23 is received in the connection receptacle, both ends of the seat belt 23 are fixed, and thus a person or an object can be fixed between the seat belt 23 and the seat surface 21a.

The seat belt 23 may be constituted by not only one seat belt member, but also by including one or more extension seat belt members. That is, the configuration of the seat belt 23 may also include a case where a connection receptacle is arranged at one end of an extension seat belt member and a connection fastener is arranged at the other end of the extension seat belt member, and the connection receptacle of the extension seat belt member is fitted together with a connection fastener of a fixed seat belt member that is fixed to the winding and fixing portion of the seat surface 21a, and a connection fastener of the extension seat belt member is fitted together with and fixed to a connection receptacle on the other side of the seat surface 21a.

The housing 11 is placed on the seat surface 21a of the seat 21 and is pressed and fixed thereto by the seat belt 23. The housing 11 has a suspension portion 11a. In a state in which the housing 11 is placed on the seat surface 21a, the suspension portion 11a is arranged on the housing 11 at a position that is away from the seat surface 21a. Typically, the suspension portion 11a is arranged on the housing 11 on the opposite side to at least one of the seat surface 21a of the seat 21 and the backrest of the seat 21. The suspension portion 11a has a shape through which the seat belt 23 can pass and be suspended on, such as the shape of a notch, a protrusion, a hole, or a groove. Suspending the seat belt 23 on the suspension portion 11a causes the housing 11 to be pressed and fixed to at least one of the seat surface 21a of the seat 21 and the backrest of the seat 21. By this means, the optical data acquisition apparatus 1 is firmly fixed to the aircraft.

The processing apparatus 12 is housed inside the housing 11, and the light collecting unit 14 is fixed to the housing 11. The processing apparatus 12 includes therein, for example, a spectroscopic unit (not shown), a detection unit (not shown), and a processing circuit (not shown). The light collecting unit 14 is typically an optical sensor or a microwave sensor. The optical sensor is capable of observing light ranging from the ultraviolet region to the near-infrared region, such as reflected light of sunlight from the surface of the Earth, or observing the infrared region, such as radiant heat from an object. The microwave sensor is a sensor that observes microwaves with longer wavelengths than infrared rays that an object emits.

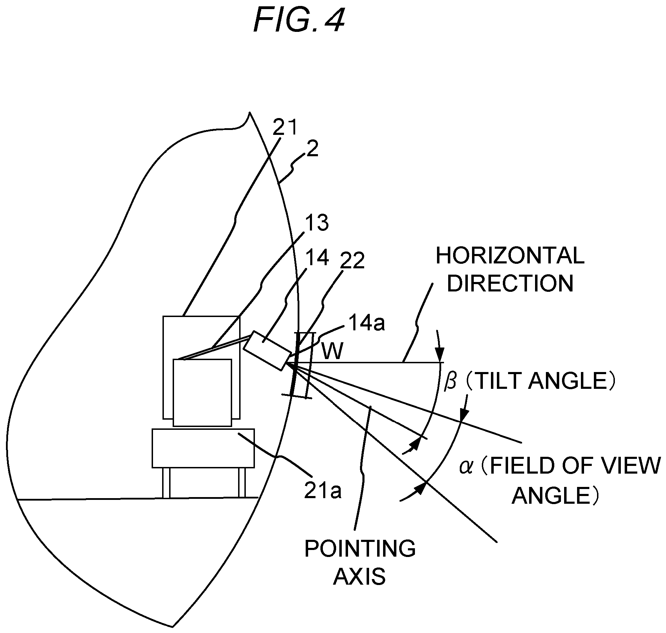

An observation region of the light collecting unit 14 will now be described with reference to Fig. 4. The light collecting unit 14 is equipped with a detection surface 14a that detects light. The detection surface 14a has a fixed direction as a pointing axis, and is capable of detecting a predetermined spread range from the pointing axis. The pointing axis is generally a direction perpendicular to the detection surface 14a. The detection surface 14a points toward an observation light source of optical data of an observation target outside of the aircraft 2 that is within the field of view from the window 22 of the aircraft 2 through the window 22 within the region of the window 22. The light collecting unit 14 is attached such that the outermost boundary of the field of view of the detection surface 14a falls within a scope S of the window 22. The method for attaching the light collecting unit 14 is described later. The fact that the outermost boundary of the field of view of the detection surface 14a of the light collecting unit 14 falls within the scope of the window 22 means that the range of a maximum field of view angle α of the detection surface 14a of the light collecting unit 14 falls within the scope S of the window 22, and the region of the wall of the aircraft 2 that is outside the frame of the window 22 is not reflected in the region detected by the detection surface 14a.

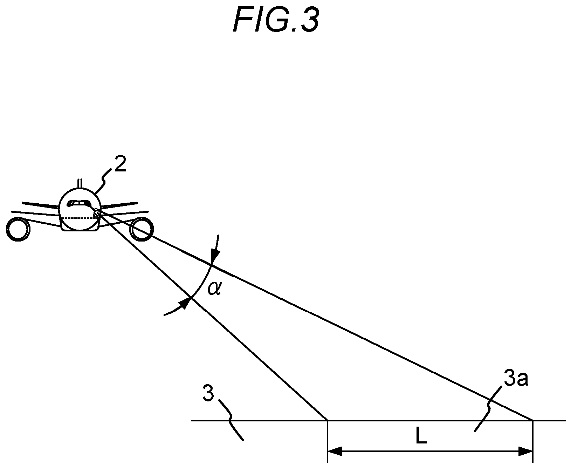

The light collecting unit 14 is an apparatus that acquires light that is outside the aircraft 2 through the window 22 of the aircraft 2 so as to enable arithmetic processing based on the intensity of the light as optical data corresponding to the light to be performed by the processing apparatus 12. As illustrated in Fig. 3 and Fig. 4, the light collecting unit 14 is set so as to aim at an observation region 3a on the surface of the Earth that is a predetermined distance away from the axis of the aircraft 2. The observation region 3a is an area located to the side of the aircraft 2 along the direction of flight of the aircraft 2 in the downward direction from the horizontal direction when the aircraft 2 is flying horizontally and during takeoff and landing. The pointing axis of the detection surface 14a of the light collecting unit 14 is defined so as to realize the observation region 3a on the surface of the Earth. The observation region 3a on the surface of the Earth can be reliably aimed at and set by a pointing direction adjustment function of an arm 13. The observation region 3a on the surface of the Earth is set so that the observation region 3a can be observed with a certain observation width by setting a tilt angle β formed between the pointing direction of the detection surface 14a of the light collecting unit 14 and the horizontal direction based on the field of view angle α of the light collecting unit 14. For example, when the field of view angle α is an angle from 25 degrees to 30 degrees, a width L of the observation region 3a on the surface of the Earth will be from 40 kilometers to 50 kilometers.

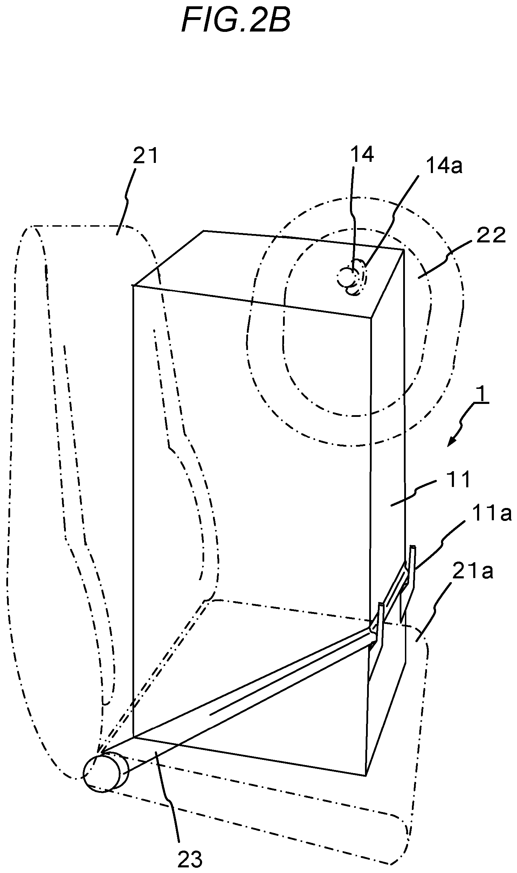

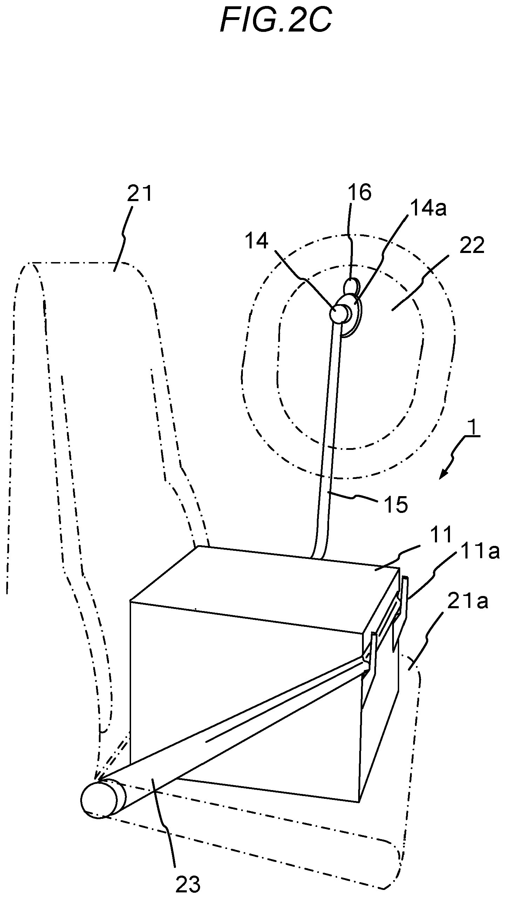

The light collecting unit 14 may be fixed to the housing 11 by an arm 13 as illustrated in Fig. 2A. Alternatively, the light collecting unit 14 may be directly fixed to the housing 11 as illustrated in Fig. 2B. In the former case, the arm 13 is a member extending from the housing 11 toward the window 22 in a manner in which one end 13a of the arm 13 is fixed to the housing 11, and another end 13b of the arm 13 holds the light collecting unit 14. The other end 13b of the arm 13 may have the pointing direction adjustment function that can adjust the pointing direction of the detection surface 14a of the light collecting unit 14 as a swing function of the light collecting unit 14 so that the light collecting unit 14 is movable along three axes that are perpendicular to each other. Alternatively, a form can also be adopted in which the light collecting unit 14 has a mechanism having the pointing direction adjustment function that can move the detection surface 14a along three axes that are perpendicular to each other. In addition, as illustrated in Fig. 2C, the light collecting unit 14 can be fixed to the window 22 by attaching to the light collecting unit 14 a suction cup 16 that adheres to the window 22. At such time, the housing 11 (processing apparatus 12) and the light collecting unit 14 that is attached to the window 22 are connected by the connection cable 15. Hereunder, an example in which the light collecting unit 14 is fixed to the housing 11 by the arm 13 as illustrated in Fig. 2A is described.

In this case, since the housing 11 does not have a height that reaches the window 22 from the seat surface 21a, the light collecting unit 14 is suspended to the appropriate height of the window 22 by the arm 13. In the latter case, the light collecting unit 14 is directly attached to the housing 11 so that the housing 11 directly holds the light collecting unit 14. In such a case, the housing 11 has a height from the seat surface 21a to the window 22, and the light collecting unit 14 can be fixed at the appropriate height of the window 22 by the housing 11. In a state in which the housing 11 is fixed to the seat 21, the light collecting unit 14 is arranged such that the detection surface 14a of the light collecting unit 14 points toward the observation region 3a on the surface of the Earth that is to the side of the aircraft 2 through the window 22 within the region of the window 22. The light collecting unit 14 is fixed to the housing 11 in a manner such that the boundary of the field of view of the detection surface 14a falls within the scope of the window 22.

The light collecting unit 14 is further equipped with at least one of an attitude sensor (not shown) capable of measuring an angle of any axis of the detection surface 14a with respect to predetermined reference axes, and a position sensor (not shown) that measures the position of the light collecting unit 14 on Earth. The attitude sensor is configured to be capable of detecting the pointing direction of the detection surface 14a of the light collecting unit 14 in a case where the other end 13b of the arm 13 or the light collecting unit 14 has the pointing direction adjustment function. The position sensor is a sensor that is capable of acquiring three-dimensional spatial position information with respect to the position and altitude of the light collecting unit 14 on Earth, and is typically a global positioning system (GPS). The position sensor can also be arranged at any place in the optical data acquisition apparatus 1, instead of in the light collecting unit 14. At least one of the data output from the attitude sensor and the data output from the position sensor is processed by the processing circuit in association with the result regarding spectroscopic information of the observation target from the field of view of the window calculated from the data acquired from the light collecting unit 14. That is, since the altitude and the position on the surface of the Earth that the detection surface 14a of the light collecting unit 14 is pointed toward is known based on the data acquired from the attitude sensor and the position sensor, it is possible to identify the observation results of the optical data acquisition apparatus 1 and the altitude and the position on the surface of the Earth. Further, in a case where a position sensor is not provided in the optical data acquisition apparatus 1, the position and altitude of the aircraft may be measured by the aircraft in which the optical data acquisition apparatus 1 is mounted and the measured values may be sent to the processing circuit, or after the aircraft's flight is completed, measured values with respect to the position and altitude of the aircraft may be associated as the location where the observation results of the optical data acquisition apparatus 1 were acquired.

In other words, an attitude sensor capable of measuring an angle of any axis of the detection surface 14a with respect to a coordinate system of predetermined reference axes is attached to the light collecting unit 14. The predetermined reference axes are, for example, the aircraft axis (roll axis) which is the longitudinal direction of the aircraft 2 when the aircraft 2 is placed horizontally, the axis in the horizontal plane perpendicular to the aircraft axis (pitch axis), and the vertical axis perpendicular to the aircraft axis and the horizontal plane (yaw axis). The coordinate system of the predetermined reference axes is, for example, a three-dimensional coordinate system defined by these axes. The attitude sensor can acquire attitude data with respect to how much an angle of deviation of the pointing direction of the detection surface 14a of the light collecting unit 14 is with respect to each of these reference axes of the coordinate system.

The processing apparatus 12 and the light collecting unit 14 are connected by the connection cable 15. The connection cable 15 is a cable that electrically or optically connects the processing apparatus 12 and the light collecting unit 14. The light collecting unit 14 or the processing apparatus 12 is equipped with an optical sensor. In a case where the light collecting unit 14 is equipped with an optical sensor, the light collected by the detection surface 14a of the light collecting unit 14 is converted into an electrical signal, and the electrical signal is transmitted to the processing circuit through the connection cable 15, which is an electrical cable. In a case where the processing apparatus 12 is equipped with an optical sensor, the light collected by the detection surface 14a of the light collecting unit 14 is transmitted to the processing circuit as an optical signal through the connection cable 15, which is typically an optical fiber. Either of these can be selectively selected depending on the optical data of the observation target in the field of view from the window 22. In a case where the connection cable 15 is an electrical cable, the information acquired by the position sensor and attitude sensor of the light collecting unit 14 is converted into electrical information and transmitted to the processing circuit through the connection cable 15 to be used for computation processing by the processing circuit.

The processing circuit of the processing apparatus 12 performs processing to calculate observation information with respect to the observation target within the field of view from the window 22 from the optical data acquired from the light collecting unit 14. The processing circuit and the software executed by the processing circuit have an electrical circuit and a software structure for measuring observation information of an observation target within the field of view from the window which are used for Earth observation by a conventional satellite. That is, the processing circuit processes data converted into an electrical signal and transmitted by the light collecting unit 14, or data obtained by converting optical data transmitted from the light collecting unit 14 into an electrical signal, to calculate observation information with respect to the observation target within the field of view from the window. The processing circuit is also a circuit that processes and stores related information such as attitude information acquired by the attitude sensor or position information acquired by the position sensor. The processing circuit then performs processing for calculating spectroscopic information with respect to the observation target within the field of view from the window by associating at least one of the data acquired by the attitude sensor and the data acquired by the position sensor with the optical data acquired from the light collecting unit 14.

For example, in a case where the observation target is gases in the Earth's atmosphere and the observation information is the concentration of gaseous components, the optical data acquired from the light collecting unit 14 is converted into light intensity data for each wavelength by spectroscopy, and the processing apparatus 12 calculates the wavelength range that is attenuated in the light intensity data for each wavelength. Then, for each wavelength of the observation target, absorption and scattering properties are identified with respect to components such as carbon dioxide, nitrogen dioxide, and methane as well as fine particles such as aerosols that are air pollutants which are present in the Earth's atmosphere. By this means, remote measurement of the concentrations of gaseous components in the atmosphere can be measured.

Further, in a case where the observation target is fluorescence of the Earth and the observation information is the amount of photosynthesis of plants, similarly to the case of observation of the concentration of gaseous components, the optical data acquired from the light collecting unit 14 is converted into light intensity data for each wavelength by spectroscopy, the processing apparatus 12 calculates the wavelength range that is attenuated in the light intensity data for each wavelength, and determines the fluorescence from plants in response to sunlight and the fluorescence in response to artificial light, and calculates the amount of photosynthesis by plants. By this means, the amount of photosynthesis during photosynthesis by plants caused by sunlight irradiation can be observed.

In addition, in a case where the observation target is a cloud and the observation information is cloud characteristics such as cloud altitude, similarly to the case of observation of the concentration of gaseous components or fluorescence, the optical data acquired from the light collecting unit 14 is converted into light intensity data for each wavelength by spectroscopy, and the processing apparatus 12 calculates the wavelength range that is attenuated in the light intensity data for each wavelength, and calculates the amount of oxygen between the cloud and the aircraft by observing the light intensity for each wavelength of reflected light of sunlight that is reflected by the cloud. By this means, it is possible to measure the amount of oxygen between the cloud and the aircraft, and to observe cloud characteristics such as altitude based on the cloud top pressure.

This application claims the benefit of Japanese Patent Application No. 2022-142763, filed on September 8, 2022, which is hereby incorporated by reference herein in its entirety.

### Reference Signs List

1 optical data acquisition apparatus
11 housing
11a suspension portion
12 processing apparatus
13 arm
14 light collecting unit
14a detection surface
15 connection cable
16 suction cup
2 aircraft
21 seat
21a seat surface
22 window
23 seat belt
3 surface of the Earth
3a measurement area

## Claims

1. An optical data acquisition apparatus configured to acquire optical data in a field of view from a window of an aircraft, the aircraft having the window and a seat juxtaposed next to the window, the seat having a seat surface,
the optical data acquisition apparatus comprising:
a housing having a processing circuit inside, the housing placed on and pressed and fixed to the seat surface of the seat;
a light collecting unit having a detection surface, the detection surface pointing toward the field of view of the window through the window, the light collecting unit fixed to the housing such that a boundary of a field of view of the detection surface falls within a scope of the window; and
a connection cable configured to electrically or optically connect the light collecting unit and the processing circuit,
wherein the processing circuit calculates observation information from the window, from optical data acquired from the light collecting unit.

2. An optical data acquisition apparatus according to claim 1,
wherein the window is a window in a side or a window in a cockpit of the aircraft.

3. An optical data acquisition apparatus according to claim 1,
wherein the observation information is one of a concentration of a gaseous component on a surface of Earth, an intensity of fluorescence emitted by plants during photosynthesis, and cloud characteristics including a cloud top height.

4. An optical data acquisition apparatus according to claim 1,
wherein the light collecting unit is fixed by either one of an arm or a suction cup, wherein one end of the arm is attached to the housing and another end of the arm holds the light collecting unit, the arm extending toward the window, the suction cup attached to the light collecting unit.

5. An optical data acquisition apparatus according to claim 1,
wherein the light collecting unit comprises at least one of an attitude sensor and a position sensor, the attitude sensor capable of measuring an angle of any axis of the detection surface with respect to predetermined reference axes, the position sensor configured to measure a position of the light collecting unit on Earth.

6. An optical data acquisition apparatus according to claim 5,
wherein the processing circuit associates at least one of data acquired by the attitude sensor and data acquired by the position sensor with the optical data to perform processing.

7. An optical data acquisition apparatus according to any one of claims 1 to 6,
wherein the seat has a seat belt capable of expanding and contracting from one side of the seat surface toward another side of the seat surface and pressing and fixing an object to the seat surface, and
wherein the housing has a suspension portion allowing the seat belt to be suspended on the suspension portion, and the pressing and fixing is performed by the seat belt suspended on the suspension portion.

8. An optical data acquisition method of acquiring, by an optical data acquisition apparatus, optical data in a field of view from a window of an aircraft, the aircraft having the window and a seat juxtaposed next to the window, the seat having a seat surface,
the optical data acquisition apparatus comprising:
a housing having a processing circuit inside, the housing placed on and pressed and fixed to the seat surface of the seat;
a light collecting unit having a detection surface, the detection surface pointing toward the field of view of the window, the light collecting unit fixed to the housing such that a boundary of a field of view of the detection surface falls within a scope of the window; and
a connection cable configured to electrically or optically connect the light collecting unit and the processing circuit,
wherein the processing circuit calculates observation information from the window, from optical data acquired from the light collecting unit.

9. An optical data acquisition method according to claim 8,
wherein the window is a window in a side or a window in a cockpit of the aircraft.

10. An optical data acquisition method according to claim 8,
wherein the observation information is one of a concentration of a gaseous component on a surface of Earth, an intensity of fluorescence emitted by plants during photosynthesis, and cloud characteristics including a cloud top height.

11. An optical data acquisition method according to claim 8,
wherein the light collecting unit is fixed by either one of an arm or a suction cup, wherein one end of the arm extending from the housing toward the window and another end of the arm holds the light collecting unit, the suction cup attached to the light collecting unit.

12. An optical data acquisition method according to claim 8,
wherein the light collecting unit comprises at least one of an attitude sensor and a position sensor, the attitude sensor capable of measuring an angle of any axis of the detection surface with respect to predetermined reference axes, the position sensor configured to measure a position of the light collecting unit on Earth.

13. An optical data acquisition method according to claim 8,
wherein the light collecting unit comprises at least one of an attitude sensor and a position sensor, the attitude sensor capable of measuring an angle of any axis of the detection surface with respect to predetermined reference axes, the position sensor configured to measure a position of the light collecting unit on Earth.

14. An optical data acquisition method according to claim 13,
wherein the processing circuit associates at least one of data acquired by the attitude sensor and data acquired by the position sensor with the optical data to perform processing.

15. An optical data acquisition method according to any one of claims 8 to 14,
wherein the seat has a seat belt capable of expanding and contracting from one side of the seat surface toward another side of the seat surface and pressing and fixing an object to the seat surface, and
wherein the housing has a suspension portion allowing the seat belt to be suspended on the suspension portion, and the pressing and fixing is performed by the seat belt suspended on the suspension portion.
